# EUROPEAN PATENT SPECIFICATION

(11) **EP 4 588 700 B1**
(45) Date of publication and mention of the grant of the patent: **22.07.2026**
(21) Application number: 24213259.5
(22) Date of filing: 15.11.2024
(51) Int. Cl.: B60K 1/04, B60K 15/04, B60L 53/16, B60L 53/14

(54) **PLUG-IN HYBRID ELECTRIC VEHICLE**
STECKBARES HYBRIDELEKTROFAHRZEUG
VÉHICULE ÉLECTRIQUE HYBRIDE ENFICHABLE

(30) Priority: 04.01.2024 JP 2024000343
(43) Date of publication of application: 23.07.2025
(73) Proprietor: Toyota Jidosha Kabushiki Kaisha, Aichi-Ken 471-8571 (JP)
(72) Inventor: OHTA, Chikashi, 471-8571 Toyota-shi (JP); TOMITA, Makoto, 471-8571 Toyota-shi (JP); KAWASHIMA, Takahiro, 471-8571 Toyota-shi (JP); SASAKI, Shoichi, 471-8571 Toyota-shi (JP); HARADA, Taku, 471-8571 Toyota-shi (JP); HIRONAKA, Masaki, 471-8571 Toyota-shi (JP)
(74) Representative: D Young & Co LLP

(56) References cited:
- EP-A1- 4 159 530
- CN-A- 109 869 063
- US-A1- 2014 197 789
- US-A1- 2015 217 707
- US-A1- 2018 056 752

## Description

### BACKGROUND

### 1. Field

The present disclosure relates to a plug-in hybrid electric vehicle that can be connected to an external electrical power supply to charge its battery.

### 2. Description of Related Art

Japanese Laid-Open Patent Publication No. 2021-160519 discloses a structure for a hybrid electric vehicle, which includes an engine and a drive motor as its drive sources. In this vehicle, the battery, high-voltage components, and exhaust system components are compactly arranged beneath the floor panel.

A minivan-type vehicle is equipped with a sliding seat as the second-row seat and a sliding door. The sliding seat is capable of sliding along the floor in the vehicle's longitudinal direction. To ensure a sufficient sliding range for the sliding seat, long sliding rails must be installed on the floor. Therefore, in a minivan-type vehicle, it is desirable for the floor behind the first-row seats to have a low, flat structure.

A plug-in hybrid electric vehicle, which can charge its battery by connecting to an external electrical power supply, requires a larger battery than a hybrid electric vehicle.

Accordingly, in a minivan-type plug-in hybrid electric vehicle, it is necessary to examine the arrangement of components that allows for both the installation of a large battery and a low, flat floor to ensure a spacious passenger compartment.
US 2014/0197789 A1 relates to a vehicle configured so that its power storage device is chargeable with electric power received from a power supply located externally to the vehicle.

### SUMMARY

The present invention provides a minivan-type plug-in hybrid electric vehicle in which a passenger compartment and a cargo space are not separated by a partition as defined by claim 1, including an engine compartment provided in front of the passenger compartment in a vehicle front-rear direction, power sources including an engine and a motor, a fuel tank configured to store fuel to be supplied to the engine, a battery configured to store electric power to be supplied to the motor, a vehicle on-board charger configured to convert AC power supplied from outside of the plug-in hybrid electric vehicle into DC power and charge the battery with the DC power, a converter including a first charging port configured to be connected to an AC power supply, and configured to convert a voltage of electric power supplied from the battery, a power transmission mechanism configured to transmit rotational power of the engine and the motor to front wheels, an inverter configured todrive the motor, an exhaust pipe configured to guide exhaust gas from the engine rearward in the vehicle front-rear direction, a first-row seat arranged on a floor panel that forms a floor surface of the passenger compartment, and a second-row seat disposed on the floor panel so as to be positioned rearward of the first-row seat in the vehicle front-rear direction. In the vehicle front-rear direction, the first-row seat is positioned rearward of the front wheels, and the second-row seat is positioned forward of the rear wheels. The second-row seat is configured to be slidable on the floor panel in the vehicle front-rear direction. The battery, the fuel tank, and the exhaust pipe are disposed under the floor panel. The fuel tank is disposed rearward of the battery in the vehicle front-rear direction. The motor, the power transmission mechanism, the inverter, and the converter are integrated so as to form a vehicle on-board unit disposed in the engine compartment. The engine is disposed in the engine compartment. The vehicle on-board charger is disposed on the vehicle on-board unit. The first charging port is connected to the vehicle on-board charger by a wire harness. The first charging port is disposed on a first side surface or a second side surface of the plug-in hybrid electric vehicle so as to be positioned forward of a front door of the plug-in hybrid electric vehicle in the vehicle front-rear direction.

Other features and aspects will be apparent from the following detailed description, the drawings, and the claims.

### BRIEF DESCRIPTION OF THE DRAWINGS

Fig. 1 is a schematic diagram of a minivan-type plug-in hybrid electric vehicle according to a first embodiment as viewed from the left side.
Fig. 2 is a schematic diagram of the plug-in hybrid electric vehicle shown in Fig. 1 as viewed from the right side.
Fig. 3 is a side view of a sliding door provided in the plug-in hybrid electric vehicle of Fig. 1 as viewed from the left side.
Fig. 4 is a schematic diagram of an internal structure of the plug-in hybrid electric vehicle shown in Fig. 1.
Fig. 5 is a schematic diagram of an arrangement of seats in the plug-in hybrid electric vehicle shown in Fig. 1.
Fig. 6 is a schematic diagram of an arrangement of components disposed on the floor panel in the plug-in hybrid electric vehicle shown in Fig. 1.
Fig. 7 is a schematic diagram of an arrangement of devices disposed under the floor panel in the plug-in hybrid electric vehicle shown in Fig. 1.
Fig. 8 is a schematic diagram of a configuration of a drive system and a configuration of an electric system in the plug-in hybrid electric vehicle shown in Fig. 1.
Fig. 9 is a schematic diagram of a plug-in hybrid electric vehicle according to a second embodiment as viewed from the left side.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

### First Embodiment

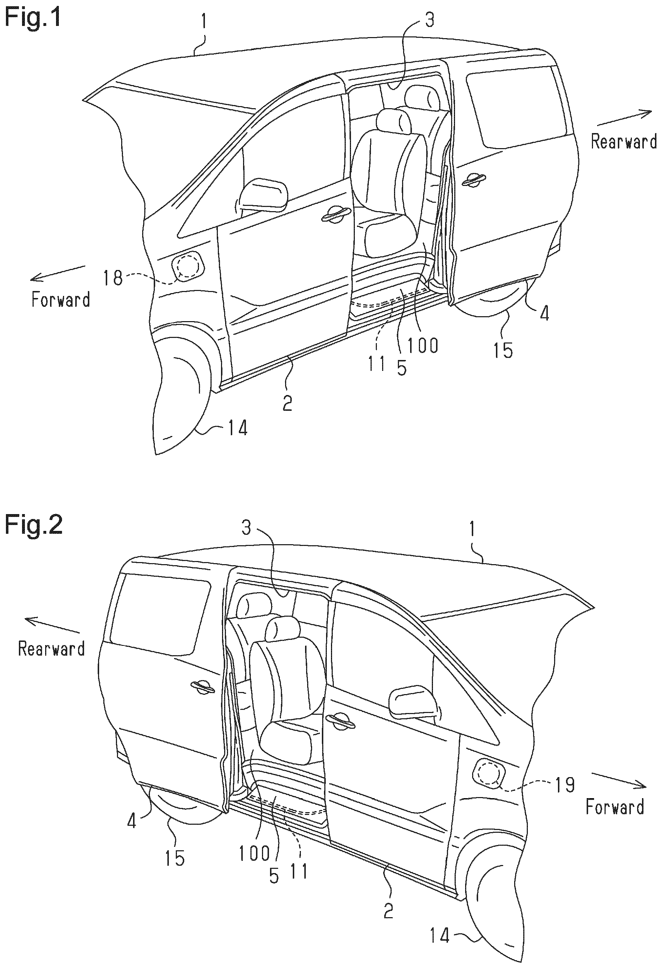

A plug-in hybrid electric vehicle 1 according to a first embodiment will now be described with reference to Figs. 1 to 8. In the following description, terms related to orientations or directions, such as "front", "rear", "upper", "lower", "right", and "left", are defined based on the plug-in hybrid electric vehicle 1.

### External Structure of the Plug-In Hybrid Electric Vehicle 1

Fig. 1 is a schematic diagram of the plug-in hybrid electric vehicle 1 according to the present embodiment as viewed from the left side. The plug-in hybrid electric vehicle 1 has a left side surface, which is one of a first side surface and a second side surface, and a right side surface, which is the other of the first side surface and the second side surface. As shown in Fig. 1, the plug-in hybrid electric vehicle 1 includes a front door 2, an opening 3, and a sliding door 4 on the left side surface. A first charging port 18 is disposed on the left side surface of the plug-in hybrid electric vehicle 1 and forward of the front door 2. The first charging port 18 will be described in detail later.

The opening 3 is opened and closed by the sliding door 4, which moves in the vehicle front-rear direction. A step panel 5 is disposed in a lower portion of the opening 3. The step panel 5 is disposed below a floor panel 100, which forms a floor surface of the plug-in hybrid electric vehicle 1. A guide rail 11 extending in the vehicle front-rear direction is fixed to a lower surface of the step panel 5. A front end of the guide rail 11 is positioned rearward of a front wheel 14. A rear end of the guide rail 11 is positioned forward of a rear wheel 15.

Fig. 2 is a schematic diagram of the plug-in hybrid electric vehicle 1 according to the present embodiment as viewed from the right side. As shown in Fig. 2, the plug-in hybrid electric vehicle 1 includes a front door 2, an opening 3, and a sliding door 4 on the right side surface, similar to the left side surface. A second charging port 19 is disposed on the right side surface of the plug-in hybrid electric vehicle 1 and forward of the front door 2. The second charging port 19 will be described in detail later.

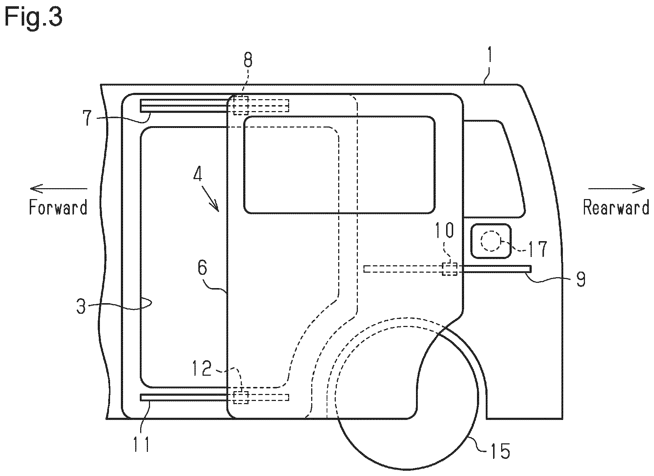

Fig. 3 is a side view of the left sliding door 4 as viewed from the left side. As shown in Fig. 3, the fuel inlet 17 is disposed on the left side surface of the plug-in hybrid electric vehicle 1 and rearward of the sliding door 4.

As shown in Fig. 1, the first charging port 18 is provided on the left side surface of the plug-in hybrid electric vehicle 1 and forward of the front door 2. That is, the first charging port 18 and the fuel inlet 17 are provided on the same side surface of the plug-in hybrid electric vehicle 1.

As shown in Fig. 3, an upper rail 7, a center rail 9, and a guide rail 11 are disposed around the opening 3. The upper rail 7 is disposed above the opening 3. The guide rail 11 is disposed below the opening 3. The center rail 9 is disposed rearward of the opening 3 on the side surface of the vehicle 1. The position of the center rail 9 in the vehicle height direction is below the upper rail 7 and above the guide rail 11.

The sliding door 4 includes a sliding door body 6, an upper hinge unit 8, a center hinge unit 10, and a guide hinge unit 12. The upper hinge unit 8 and the guide hinge unit 12 are fixed to parts of the sliding door body 6 near the front end in a vehicle length direction. The center hinge unit 10 is fixed to a part of the sliding door body 6 near the rear end in the vehicle length direction. The vehicle length direction coincides with the vehicle front-rear direction.

The upper hinge unit 8 is fixed to an upper end portion of the sliding door body 6. The guide hinge unit 12 is fixed to a lower end portion of the sliding door body 6. The center hinge unit 10 is fixed to a central portion of the sliding door body 6 in the vertical direction.

The upper hinge unit 8 is movably supported by the upper rail 7. The center hinge unit 10 is movably supported by the center rail 9. The guide hinge unit 12 is movably supported by the guide rail 11. Thus, the upper hinge unit 8, the center hinge unit 10, and the guide hinge unit 12 connect the sliding door body 6 to the side surface of the vehicle 1. The upper hinge unit 8 moves along the upper rail 7. The center hinge unit 10 moves along the center rail 9. The guide hinge unit 12 moves along the guide rail 11. The sliding door body 6 thus moves relative to the side surface of the vehicle 1. The upper rail 7, the center rail 9, and the guide rail 11 define the moving direction of the sliding door 4.

### Internal Structure of the Plug-In Hybrid Electric Vehicle 1

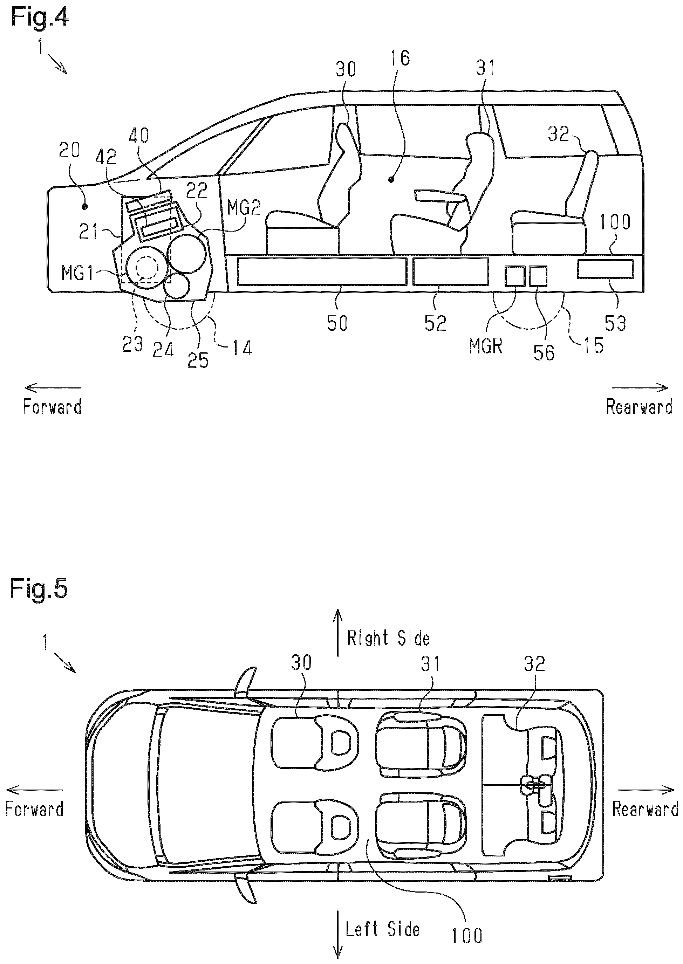

Fig. 4 is a side view schematically showing an internal structure of the plug-in hybrid electric vehicle 1. As shown in Fig. 4, the plug-in hybrid electric vehicle 1 is a minivan-type vehicle in which a passenger compartment 16 and a cargo space are not separated by a partition. The plug-in hybrid electric vehicle 1 includes an engine compartment 20 forward of the passenger compartment 16. Inside the engine compartment 20, an engine 21 and a vehicle on-board unit 25 are disposed as power sources. The vehicle on-board unit 25 includes a first motor-generator MG1, a second motor-generator MG2, a power control unit 22, a power split mechanism 23, and a speed reduction mechanism 24. These devices included in the vehicle on-board unit 25 are integrated with each other. A DC/DC converter 42 is disposed inside the power control unit 22. A vehicle on-board charger 40 is disposed on the vehicle on-board unit 25. The vehicle on-board charger 40 and the DC/DC converter 42 are high-voltage components to which a high voltage is input.

First-row seats 30, second-row seats 31, and third-row seats 32 are disposed on the floor panel 100. The second-row seats 31 are positioned rearward of the first-row seats 30. In the vehicle side view, the first-row seats 30 are positioned rearward of the front wheel 14. In the vehicle side view, the second-row seats 31 are positioned forward of the rear wheel 15.

A battery 50, a fuel tank 52, a muffler 53, a rear-wheel drive motor-generator MGR, and a rear-wheel speed reduction mechanism 56 are disposed under the floor panel 100. The battery 50 is configured to store electric power to be supplied to the first motor-generator MG1, the second motor-generator MG2, and the rear-wheel drive motor-generator MGR. The fuel tank 52 is configured to store fuel to be supplied to the engine 21. The muffler 53 is configured to reduce exhaust noise.

The fuel tank 52 is disposed rearward of the battery 50. The rear-wheel drive motor-generator MGR is disposed rearward of the fuel tank 52. The muffler 53 is disposed rearward of the rear-wheel drive motor-generator MGR.

Fig. 5 is a plan view schematically showing the arrangement of the seats. As shown in Fig. 5, the first-row seats 30 include a driver's seat and a front passenger seat. The second-row seats 31 include two independent seats. The third-row seats 32 are positioned rearward of the second-row seats 31.

### Components Disposed on the Floor Panel 100

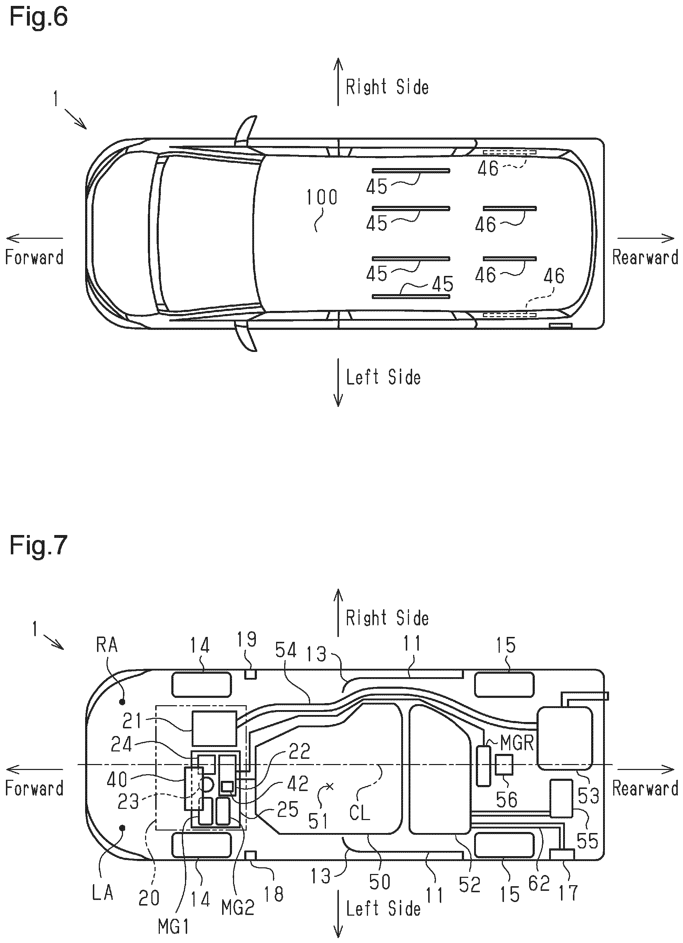

Fig. 6 is a plan view schematically showing the arrangement of components disposed on the floor panel 100. As shown in Fig. 6, four first slide rails 45 extending in the vehicle front-rear direction are disposed on the floor panel 100. Four second slide rails 46 extending in the vehicle front-rear direction are disposed behind the first slide rails 45. The first slide rails 45 are all disposed on the floor panel 100. Two of the four second slide rails 46 at the center in the vehicle width direction are disposed on the floor panel 100. The remaining two second slide rails 46 are disposed on the side surfaces of the vehicle 1 in the passenger compartment 16.

As shown in Fig. 5, the second-row seats 31 are disposed on the first slide rails 45. The second-row seats 31 are configured to be slidable in the vehicle front-rear direction along the first slide rails 45. The third-row seats 32 are disposed on the second slide rails 46. The third-row seats 32 are configured to be slidable in the vehicle front-rear direction along the second slide rails 46.

### Devices Disposed under the Floor Panel 100

Fig. 7 is a plan view schematically showing the arrangement of devices disposed under the floor panel 100. The plug-in hybrid electric vehicle 1 is divided into a right area RA and a left area LA with a center line CL, indicating the center in the vehicle width direction, serving as a boundary.

The battery 50 is disposed so as to extend over both the right area RA and the left area LA. The battery 50 is disposed closer to the left side of the vehicle 1 than to the right side. A center of gravity 51 of the battery 50 is positioned in the left area LA. That is, the battery 50 is arranged offset in the vehicle width direction so that the center of gravity 51 of the battery 50 is displaced from the center line CL in the vehicle width direction.

The plug-in hybrid electric vehicle 1 includes the guide rails 11, which are located under the floor panel 100 and slidably support the sliding doors 4. The guide rails 11 are arranged so as to overlap with a part of the battery 50 in the vehicle front-rear direction. Each guide rail 11 includes a curved portion 13 that extends forward so as to curve inward in the vehicle width direction. When the sliding door 4 is closed, the sliding door 4 is pulled inward in the vehicle width direction along the curved portion 13 of the guide rail 11.

An exhaust pipe 54 configured to guide exhaust gas from the engine 21 rearward is disposed under the floor panel 100. The exhaust pipe 54 connects the engine 21 to the muffler 53. The exhaust pipe 54 is disposed closer to the right side of the vehicle 1 than to the left side. The exhaust pipe 54 is disposed in the right area RA. The exhaust pipe 54 is disposed toward the side opposite to the side toward which the battery 50 is disposed in the vehicle width direction. The exhaust pipe 54 is disposed between the battery 50 and the guide rail 11 in the vehicle width direction. The exhaust pipe 54 is bent outward in the vehicle width direction along the curved portion 13 of the corresponding guide rail 11.

The fuel tank 52 is disposed rearward of the battery 50. The fuel tank 52 is connected to the fuel inlet 17 via a fuel supply pipe 62.

A fuel vapor recovery device 55 is disposed rearward of the rear-wheel drive motor-generator MGR and to a side of the muffler 53 in the vehicle width direction. The fuel vapor recovery device 55 is a canister that adsorbs fuel vapor gas generated inside the fuel tank 52.

### Drive System of the Plug-In Hybrid Electric Vehicle 1

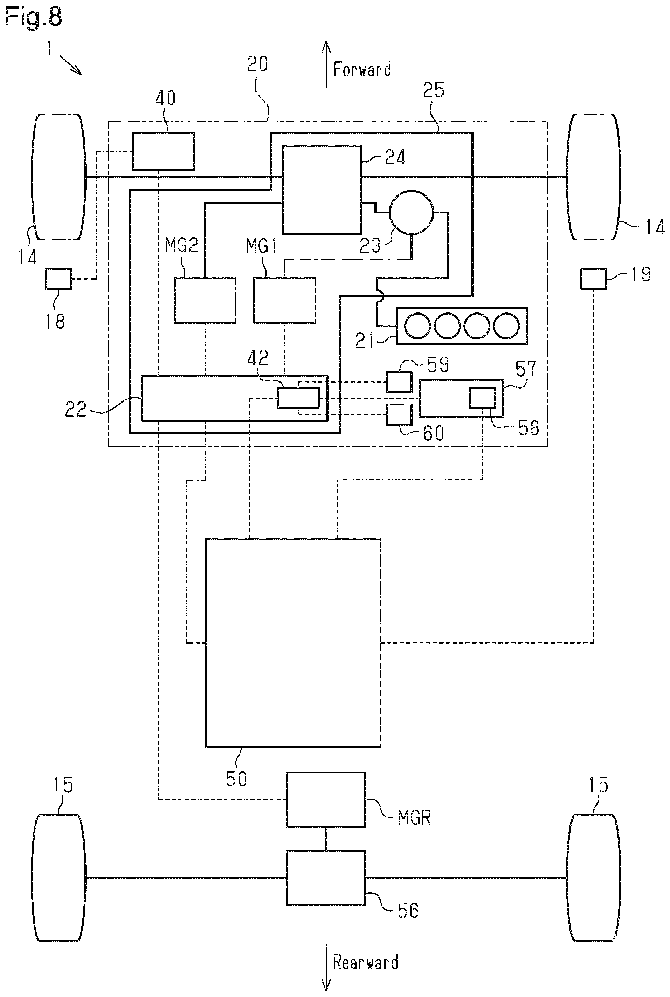

Fig. 8 schematically shows a configuration of a drive system and a configuration of an electric system in the plug-in hybrid electric vehicle 1 of the present embodiment.

As shown in Fig. 8, the plug-in hybrid electric vehicle 1 includes the vehicle on-board unit 25 inside the engine compartment 20. As shown in Fig. 8, the second motor-generator MG2 of the vehicle on-board unit 25 is connected to the battery 50 via the power control unit 22. The second motor-generator MG2 is coupled to the front wheels 14 via the speed reduction mechanism 24. The rotational power of the second motor-generator MG2 is transmitted to the front wheels 14 via the speed reduction mechanism 24, which is a power transmission mechanism. In other words, the second motor-generator MG2 functions as a drive motor.

The engine 21 is connected to the front wheels 14 via the power split mechanism 23 and the speed reduction mechanism 24. Like the speed reduction mechanism 24, the power split mechanism 23 is also a power transmission mechanism. The rotational power of the engine 21 is transmitted to the front wheels 14 via the power transmission mechanisms. The first motor-generator MG1 is coupled to the power split mechanism 23. The first motor-generator MG1 is a three-phase AC motor-generator. The power split mechanism 23 is a planetary gear mechanism. The power split mechanism 23 is capable of splitting the driving force among the engine 21, the first motor-generator MG1, and the front wheels 14.

The first motor-generator MG1 generates electric power by receiving the driving force of the engine 21 and the driving force from the front wheels 14. The first motor-generator MG1 functions as a starter to drive the crankshaft, which is the output shaft of the engine 21, when initiating the engine 21. In this case, the first motor-generator MG1 functions as an electric motor that generates a driving force in response to supply of electric power from the battery 50. In other words, the first motor-generator MG1 functions as a drive motor.

The first motor-generator MG1 and the second motor-generator MG2 are connected to the battery 50 via the power control unit 22. AC power generated by the first motor-generator MG1 is converted into DC power by the power control unit 22. The battery 50 is charged with the DC power converted by the power control unit 22. In other words, the power control unit 22 functions as an inverter.

The DC power of the battery 50 is supplied to the power control unit 22. The DC power supplied to the power control unit 22 is converted into AC power by the power control unit 22. The AC power converted by the power control unit 22 is supplied to the second motor-generator MG2. When the plug-in hybrid electric vehicle 1 is decelerated, the second motor-generator MG2 generates electric power using the driving force from the front wheels 14. The battery 50 is charged with the generated electric power. In other words, the plug-in hybrid electric vehicle 1 performs charging through regenerative braking. In this case, the second motor-generator MG2 functions as a power generator. The AC power generated by the second motor-generator MG2 is converted into DC power by the power control unit 22. The battery 50 is charged with the DC power converted by the power control unit 22.

The rear-wheel drive motor-generator MGR is connected to the battery 50 via the power control unit 22. The rear-wheel drive motor-generator MGR is coupled to the rear wheels 15 via the rear-wheel speed reduction mechanism 56. The DC power of the battery 50 is converted into AC power by the power control unit 22, and then supplied to the rear-wheel drive motor-generator MGR. The rear-wheel drive motor-generator MGR is an electric motor that drives the rear wheels 15 by using electric power supplied from the battery 50. In other words, the rear-wheel drive motor-generator MGR functions as a drive motor.

When the plug-in hybrid electric vehicle 1 is decelerated, the rear-wheel drive motor-generator MGR generates electric power using the driving force from the rear wheels 15. The battery 50 is charged with the generated electric power. In this case, the rear-wheel drive motor-generator MGR functions as a generator. AC power generated by the rear-wheel drive motor-generator MGR is converted into DC power by the power control unit 22, and the battery 50 is charged with the DC power.

### Electric System of the Plug-In Hybrid Electric Vehicle 1

As shown in Fig. 8, the plug-in hybrid electric vehicle 1 includes a vehicle on-board charger 40 and a vehicle on-board unit 25 inside the engine compartment 20. The plug-in hybrid electric vehicle 1 includes the DC/DC converter 42 inside the power control unit 22 of the vehicle on-board unit 25. Further, the plug-in hybrid electric vehicle 1 includes the first charging port 18 and the second charging port 19 as charging ports into which charging plugs are inserted from the outside of the vehicle 1. The first charging port 18 is used for standard charging, which is performed using an AC power supply such as 100 V or 200 V. The second charging port 19 is used for fast charging with a high-voltage DC power supply, such as 50 kW.

As shown in Fig. 8, the battery 50 is connected to the vehicle on-board charger 40 via a wire harness. The vehicle on-board charger 40 is connected to the first charging port 18 via a wire harness. The vehicle on-board charger 40 charges the battery 50 by converting AC power input from an AC power supply connected to the first charging port 18 into DC power and outputting the DC power. That is, the plug-in hybrid electric vehicle 1 can use an AC power supply as an external electrical power supply for charging the battery 50.

The battery 50 is connected to the second charging port 19 via a wire harness. A DC power supply is connected to the second charging port 19. The DC power input from the DC power supply connected to the second charging port 19 is supplied to the battery 50. That is, the plug-in hybrid electric vehicle 1 can use a DC power supply as an external electrical power supply for charging the battery 50.

The battery 50 supplies DC power to the DC/DC converter 42 and auxiliary devices. The DC/DC converter 42 is a converter that decreases the voltage of the battery 50 and supplies the decreased voltage to multiple auxiliary devices.

The auxiliary devices to which electric power is supplied from the DC/DC converter 42 include an electric power steering system 59 and an electric oil pump 60 disposed in the engine compartment 20. The electric power steering system 59 is a mechanism that assists steering operation of the driver. The electric oil pump 60 is a mechanism that draws lubricating oil and uses the lubricating oil to lubricate the engine 21. The DC/DC converter 42 supplies electric power to an air conditioner 57. The air conditioner 57 performs air conditioning of the passenger compartment 16 using the electric power supplied from the DC/DC converter 42.

The auxiliary devices that receive DC power from the battery 50 include a water heater 58. The water heater 58 heats water into hot water using the electric power supplied from the battery 50. The air conditioner 57 uses the hot water as a heat source.

### Operation of Present Embodiment

The above-described configuration does not require wire harnesses to connect the drive motor, the power control unit 22, the power transmission mechanism, the power control unit 22, and the DC/DC converter 42 to each other, unlike a vehicle in which these devices are disposed separately. The size of the unit is smaller than in the case in which these devices are separate devices. These devices, including the vehicle on-board charger 40, can thus be integrated inside the engine compartment 20. Therefore, the plug-in hybrid electric vehicle 1 has a reduced number of devices installed under the floor panel 100. This allows the plug-in hybrid electric vehicle 1 to accommodate the large battery 50 beneath the floor panel 100 while maintaining a flat floor without raising the position of the floor panel 100.

### Advantages of the Present Embodiment

(1) The above-described plug-in hybrid electric vehicle 1 accommodates the large battery 50 while achieving a low and flat floor to ensure a spacious passenger compartment.
(2) According to the above-described configuration, the operation of the sliding door 4 is not hindered even when the charging plug is inserted into the first charging port 18. The user can freely operate the sliding door 4 even when the plug-in hybrid electric vehicle 1 is being charged.
(3) The fuel inlet 17 is disposed on the side surface of the vehicle 1 and rearward of the sliding door 4. The first charging port 18 and the fuel inlet 17 are disposed at different positions on the vehicle 1. Thus, the user can perform charging or refueling without confusing the first charging port 18 with the fuel inlet 17.
(4) The fuel inlet 17 is disposed rearward of the sliding door 4 on the side surface of the vehicle 1 on which the first charging port 18 is provided. The first charging port 18 and the fuel inlet 17 are provided on the same side surface of the plug-in hybrid electric vehicle 1. This allows the user to easily remember the positions of the first charging port 18 and the fuel inlet 17. This configuration helps reduce the likelihood of the user misaligning the plug-in hybrid electric vehicle 1 when approaching a charging station or fuel station with the plug-in hybrid electric vehicle 1.
(5) The above-described plug-in hybrid electric vehicle 1 includes the second charging port 19. A DC power supply can be connected to the second charging port 19. By using the second charging port 19, the battery 50 can be charged with electric power supplied from the DC power supply. According to the above-described configuration, the battery 50 can be charged by both a DC power supply and an AC power supply.
(6) The second charging port 19 is disposed on a side surface of the vehicle 1 different from the side surface of the vehicle 1 on which the first charging port 18 is disposed. The second charging port 19, to which a DC power supply can be connected, and the first charging port 18, to which an AC power supply can be connected, are disposed on different side surfaces of the plug-in hybrid electric vehicle 1. As a result, the plug-in hybrid electric vehicle 1 reduces the likelihood of the user confusing the second charging port 19 for DC power with the first charging port 18 for AC power when charging the plug-in hybrid electric vehicle 1.

### Modifications

The first embodiment may be modified as follows. The first embodiment and the following modifications related to the first embodiment can be combined as long as the combined modifications remain technically consistent with each other.

The fuel inlet 17 may be disposed at a position other than the side surface of the vehicle 1 on which the first charging port 18 is provided, or may be disposed at a position not rearward of the sliding door 4. For example, the fuel inlet 17 may be disposed on the side surface of the vehicle 1 on which the second charging port 19 is provided.

The plug-in hybrid electric vehicle 1 does not necessarily need to include the second charging port 19. In other words, the plug-in hybrid electric vehicle 1 may include only the first charging port 18 as the charging port into which a charging plug is inserted.

### Second Embodiment

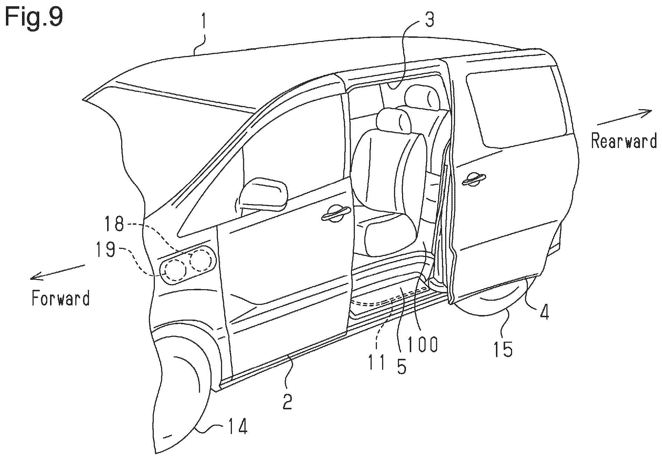

Next, a second embodiment will be described with reference to Fig. 9. The second embodiment will be described, focusing on the differences from the first embodiment. In the second embodiment, the second charging port 19 is disposed at a position different from that in the first embodiment.

Fig. 9 is a schematic diagram of the plug-in hybrid electric vehicle 1 according to the second embodiment as viewed from the left side. The first charging port 18 and the second charging port 19 are disposed on the left side surface of the plug-in hybrid electric vehicle 1 and forward of the front door 2.

### Operation of Second Embodiment

In the above-described plug-in hybrid electric vehicle 1, the second charging port 19 is disposed forward of the front door 2 on the side surface of the vehicle 1 on which the first charging port 18 is disposed.

According to the above-described configuration, the second charging port 19 to which a DC power supply can be connected, and the first charging port 18, to which an AC power supply can be connected, are provided on the same side surface of the plug-in hybrid electric vehicle 1.

### Advantages of Second Embodiment

(1) The user of the plug-in hybrid electric vehicle 1 can easily remember the positions of the first charging port 18 and the second charging port 19. This configuration helps reduce the likelihood of the user misaligning the plug-in hybrid electric vehicle 1 when approaching a charging station with the plug-in hybrid electric vehicle 1.

### Modifications of Second Embodiment

The above-described second embodiment may be modified as follows. The second embodiment and the following modifications related to the second embodiment can be combined as long as the combined modifications remain technically consistent with each other.

The fuel inlet 17 may be disposed at a position other than the side surface of the vehicle 1 on which the first charging port 18 is provided, or may be disposed at a position not rearward of the sliding door 4. For example, the fuel inlet 17 may be disposed on the side surface of the vehicle 1 on which the first charging port 18 is not provided.

### Other Modifications

The following are modifications commonly applicable to the above-described embodiments. The following modifications can be combined as long as the combined modifications remain technically consistent with each other.

As long as the first charging port 18 is disposed on the side surface of the vehicle 1 and forward the front door 2, the fuel inlet 17 may be disposed at a position other than the side surface of the vehicle 1, or may be disposed at a position not rearward of the sliding door 4

The plug-in hybrid electric vehicle 1 may be configured without the sliding doors 4, the upper rails 7, the center rails 9, and the guide rails 11.

The plug-in hybrid electric vehicle 1 may be configured with a sliding door 4, an upper rail 7, a center rail 9, and a guide rail 11 provided on only one of the two side surfaces.

Various changes in form and details may be made to the examples above without departing from the scope of the claims. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims

## Claims

1. A minivan-type plug-in hybrid electric vehicle (1) in which a passenger compartment (16) and a cargo space are not separated by a partition, the vehicle (1) comprising:
an engine compartment (20) provided in front of the passenger compartment (16) in a vehicle front-rear direction;
power sources including an engine (21) and a motor (MG1, MG2);
a fuel tank (52) configured to store fuel to be supplied to the engine (21);
a battery (50) configured to store electric power to be supplied to the motor (MG1, MG2);
a vehicle on-board charger (40) configured to convert AC power supplied from outside of the plug-in hybrid electric vehicle (1) into DC power and charge the battery (50) with the DC power;
a converter (42) including a first charging port (18) configured to be connected to an AC power supply, and configured to convert a voltage of electric power supplied from the battery (50);
a power transmission mechanism (23, 24) configured to transmit rotational power of the engine (21) and the motor (MG1, MG2) to front wheels (14);
an inverter (22) configured to drive the motor (MG1, MG2);
an exhaust pipe (54) configured to guide exhaust gas from the engine (21) rearward in the vehicle front-rear direction;
a first-row seat (30) arranged on a floor panel (100) that forms a floor surface of the passenger compartment (16); and
a second-row seat (31) disposed on the floor panel (100) so as to be positioned rearward of the first-row seat (30) in the vehicle front-rear direction, wherein
in the vehicle front-rear direction, the first-row seat (30) is positioned rearward of the front wheels (14), and the second-row seat (31) is positioned forward of the rear wheels (15),
the second-row seat (31) is configured to be slidable on the floor panel (100) in the vehicle front-rear direction,
the battery (50), the fuel tank (52), and the exhaust pipe (54) are disposed under the floor panel (100),
the fuel tank (52) is disposed rearward of the battery (50) in the vehicle front-rear direction,
the motor (MG1, MG2), the power transmission mechanism (23, 24), the inverter (22), and the converter (42) are integrated so as to form a vehicle on-board unit (25) disposed in the engine compartment (20),
the engine (21) is disposed in the engine compartment (20), **characterised in that**
the vehicle on-board charger (40) is disposed on the vehicle on-board unit (25),
the first charging port (18) is connected to the vehicle on-board charger (40) by a wire harness, and
the first charging port (18) is disposed on a first side surface or a second side surface of the plug-in hybrid electric vehicle (1) so as to be positioned forward of a front door (2) of the plug-in hybrid electric vehicle (1) in the vehicle front-rear direction.

2. The plug-in hybrid electric vehicle (1) according to claim 1, further comprising:
a sliding door (4) provided on at least the first side surface of the first side surface and the second side surface; and
a fuel inlet (17) disposed on the first side surface so as to be positioned rearward of the sliding door (4) in the vehicle front-rear direction.

3. The plug-in hybrid electric vehicle (1) according to claim 2, wherein the fuel inlet (17) and the first charging port (18) are both disposed on the first side surface.

4. The plug-in hybrid electric vehicle (1) according to claim 1, further comprising a second charging port (19) configured to be connectable to a DC power supply in order to charge the battery (50) with electric power supplied from the DC power supply.

5. The plug-in hybrid electric vehicle (1) according to claim 4, wherein
the first charging port (18) is disposed on the first side surface, and
the second charging port (19) is disposed on the first side surface so as to be positioned forward of the front door (2) in the vehicle front-rear direction.

6. The plug-in hybrid electric vehicle (1) according to claim 4, wherein
the first charging port (18) is disposed on the first side surface, and
the second charging port (19) is disposed on the second side surface so as to be positioned forward of the front door (2) in the vehicle front-rear direction.

## Patentansprüche

1. Plug-in-Hybridelektrofahrzeug (1) vom Typ Minivan, in dem ein Insassenraum (16) und ein Laderaum nicht durch eine Trennwand getrennt sind, wobei das Fahrzeug (1) umfasst:
einen Motorraum (20), der, in einer Vorn-Hinten-Richtung des Fahrzeugs gesehen, vor dem Insassenraum (16) vorgesehen ist;
Energiequellen, die einen Verbrennungsmotor (21) und einen Elektromotor (MG1, MG2) umfassen;
einen Kraftstofftank (52), der dafür ausgelegt ist, Kraftstoff zu speichern, der dem Verbrennungsmotor (21) zugeführt werden soll;
eine Batterie (50), die dafür ausgelegt ist, elektrischen Strom zu speichern, der dem Elektromotor (MG1, MG2) zugeführt werden soll;
einen Fahrzeug-Onboard-Lader (40), der dafür ausgelegt ist, Wechselstrom, der von außerhalb des Plug-in-Hybridelektrofahrzeugs (1) zugeführt wird, in Gleichstrom umzuwandeln und die Batterie (50) mit dem Gleichstrom zu laden;
einen Wandler (42), der einen ersten Ladeanschluss (18) aufweist, der dafür ausgelegt ist, an eine Wechselstromquelle angeschlossen zu werden, und dafür ausgelegt ist, eine von der Batterie (50) gelieferte elektrische Spannung umzuwandeln;
einen Kraftübertragungsmechanismus (23, 24), der dafür ausgelegt ist, Drehkraft des Verbrennungsmotors (21) und des Elektromotors (MG1, MG2) auf Vorderräder (14) zu übertragen;
einen Wechselrichter (22), der dafür ausgelegt ist, den Elektromotor (MG1, MG2) anzutreiben;
ein Abgasrohr (54), das dafür ausgelegt ist, Abgas vom Verbrennungsmotor (21), in der Vorn-Hinten-Richtung des Fahrzeugs gesehen, nach hinten zu leiten;
einen Erste-Reihe-Sitz (30), der auf einer Bodenplatte (100) angeordnet ist, die eine Bodenfläche des Insassenraumes (16) bildet; und
einen Zweite-Reihe-Sitz (31), der auf einer Bodenplatte (100) so angeordnet ist, dass er, in der Vorn-Hinten-Richtung des Fahrzeugs gesehen, hinter dem Erste-Reihe-Sitz (30) positioniert ist, wobei,
in der Vorn-Hinten-Richtung des Fahrzeugs gesehen, der Erste-Reihe-Sitz (30) hinter den Vorderrädern (14) positioniert ist und der Zweite-Reihe-Sitz (31) vor den Hinterrädern (15) positioniert ist,
der Zweite-Reihe-Sitz (31) dafür ausgelegt ist, auf der Bodenplatte (100) in der Vorn-Hinten-Richtung des Fahrzeugs verschiebbar zu sein,
die Batterie (50), der Kraftstofftank (52) und das Abgasrohr (54) unter der Bodenplatte (100) angeordnet sind,
der Kraftstofftank (52), in der Vorn-Hinten-Richtung des Fahrzeugs gesehen, hinter der Batterie (50) angeordnet ist,
der Elektromotor (MG1, MG2), der Kraftübertragungsmechanismus (23, 24), der Wechselrichter (22) und der Wandler (42) so integriert sind, dass sie eine Fahrzeug-Onboard-Einheit (25) bilden, die im Motorraum (20) angeordnet ist,
der Verbrennungsmotor (21) im Motorraum (20) angeordnet ist, **dadurch gekennzeichnet, dass**
der Fahrzeug-Onboard-Lader (40) auf der Fahrzeug-Onboard-Einheit (25) angeordnet ist,
der erste Ladeanschluss (18) mit dem Fahrzeug-Onboard-Lader (40) durch einen Kabelbaum verbunden ist, und
der erste Ladeanschluss (18) auf einer ersten Seitenfläche oder einer zweiten Seitenfläche des Plug-in-Hybridelektrofahrzeugs (1) so angeordnet ist, dass er, in der Vorn-Hinten-Richtung des Fahrzeugs gesehen, vor einer Vordertür (2) des Plug-in-Hybridelektrofahrzeugs (1) positioniert ist.

2. Plug-in-Hybridelektrofahrzeug (1) nach Anspruch 1, welches ferner umfasst:
eine Schiebetür (4), die auf wenigstens der ersten Seitenfläche von der ersten Seitenfläche und der zweiten Seitenfläche vorgesehen ist; und
einen Kraftstoffeinlass (17), der auf der ersten Seitenfläche so angeordnet ist, dass er, in der Vorn-Hinten-Richtung des Fahrzeugs gesehen, hinter der Schiebetür (4) positioniert ist.

3. Plug-in-Hybridelektrofahrzeug (1) nach Anspruch 2, wobei der Kraftstoffeinlass (17) und der erste Ladeanschluss (18) beide auf der ersten Seitenfläche angeordnet sind.

4. Plug-in-Hybridelektrofahrzeug (1) nach Anspruch 1, welches ferner einen zweiten Ladeanschluss (19) umfasst, der so ausgebildet ist, dass er an eine Gleichstromquelle anschließbar ist, um die Batterie (50) mit von der Gleichstromquelle geliefertem elektrischem Strom zu laden.

5. Plug-in-Hybridelektrofahrzeug (1) nach Anspruch 4, wobei
der erste Ladeanschluss (18) auf der ersten Seitenfläche angeordnet ist und
der zweite Ladeanschluss (19) auf der ersten Seitenfläche so angeordnet ist, dass er, in der Vorn-Hinten-Richtung des Fahrzeugs gesehen, vor der Vordertür (2) positioniert ist.

6. Plug-in-Hybridelektrofahrzeug (1) nach Anspruch 4, wobei
der erste Ladeanschluss (18) auf der ersten Seitenfläche angeordnet ist und
der zweite Ladeanschluss (19) auf der zweiten Seitenfläche so angeordnet ist, dass er, in der Vorn-Hinten-Richtung des Fahrzeugs gesehen, vor der Vordertür (2) positioniert ist.

## Revendications

1. Véhicule électrique hybride rechargeable (1) de type monospace dans lequel un habitacle (16) et un espace utilitaire ne sont pas séparés par une cloison, le véhicule (1) comprenant :
un compartiment moteur (20) situé devant l'habitacle (16) dans une direction avant-arrière du véhicule ;
des sources d'énergie comportant un moteur thermique (21) et un moteur électrique (MG1, MG2) ;
un réservoir de carburant (52) configuré pour stocker du carburant destiné à alimenter le moteur thermique (21) ;
une batterie (50) configurée pour stocker de l'énergie électrique destinée à alimenter le moteur électrique (MG1, MG2) ;
un chargeur embarqué (40) configuré pour convertir un courant alternatif fourni de l'extérieur du véhicule électrique hybride rechargeable (1) en un courant continu et charger la batterie (50) avec le courant continu ;
un convertisseur (42) comportant un premier port de charge (18) configuré pour être connecté à une alimentation en courant alternatif, et configuré pour convertir une tension de l'énergie électrique fournie par la batterie (50) ;
un mécanisme de transmission de puissance (23, 24) configuré pour transmettre une puissance de rotation du moteur thermique (21) et du moteur électrique (MG1, MG2) à des roues avant (14) ;
un onduleur (22) configuré pour entraîner le moteur électrique (MG1, MG2) ;
un tuyau d'échappement (54) configuré pour guider les gaz d'échappement du moteur thermique (21) vers l'arrière dans la direction avant-arrière du véhicule ;
un siège de première rangée (30) agencé sur un panneau de plancher (100) qui forme une surface de plancher de l'habitacle (16) ; et
un siège de deuxième rangée (31) disposé sur le panneau de plancher (100) de manière à être positionné à l'arrière du siège de première rangée (30) dans la direction avant-arrière du véhicule, dans lequel
dans la direction avant-arrière du véhicule, le siège de première rangée (30) est positionné à l'arrière des roues avant (14), et le siège de deuxième rangée (31) est placé à l'avant des roues arrière (15),
le siège de deuxième rangée (31) est configuré pour pouvoir coulisser sur le panneau de plancher (100) dans la direction avant-arrière du véhicule,
la batterie (50), le réservoir de carburant (52) et le tuyau d'échappement (54) sont disposés sous le panneau de plancher (100),
le réservoir de carburant (52) est disposé à l'arrière de la batterie (50) dans la direction avant-arrière du véhicule,
le moteur électrique (MG1, MG2), le mécanisme de transmission de puissance (23, 24), l'onduleur (22) et le convertisseur (42) sont intégrés de manière à former une unité embarquée (25) disposée dans le compartiment moteur (20),
le moteur thermique (21) est disposé dans le compartiment moteur (20), **caractérisé en ce que**
le chargeur embarqué (40) est disposé sur l'unité embarquée (25),
le premier port de charge (18) est connecté au chargeur embarqué (40) par un faisceau de câbles, et
le premier port de charge (18) est disposé sur une première surface latérale ou sur une deuxième surface latérale du véhicule électrique hybride rechargeable (1) de manière à être positionné à l'avant d'une porte avant (2) du véhicule électrique hybride rechargeable (1) dans la direction avant-arrière du véhicule.

2. Véhicule électrique hybride rechargeable (1) selon la revendication 1, comprenant en outre :
une porte coulissante (4) située sur au moins la première surface latérale parmi la première surface latérale et la deuxième surface latérale ; et
un orifice de remplissage de carburant (17) disposé sur la première surface latérale de manière à être positionné à l'arrière de la porte coulissante (4) dans la direction avant-arrière du véhicule.

3. Véhicule électrique hybride rechargeable (1) selon la revendication 2, dans lequel l'orifice de remplissage de carburant (17) et le premier port de charge (18) sont tous deux disposés sur la première surface latérale.

4. Véhicule électrique hybride rechargeable (1) selon la revendication 1, comprenant en outre un deuxième port de charge (19) configuré pour pouvoir être connecté à une alimentation en courant continu afin de charger la batterie (50) avec de l'énergie électrique fournie par l'alimentation en courant continu.

5. Véhicule électrique hybride rechargeable (1) selon la revendication 4, dans lequel
le premier port de charge (18) est disposé sur la première surface latérale, et
le deuxième port de charge (19) est disposé sur la première surface latérale de manière à être positionné à l'avant de la porte avant (2) dans la direction avant-arrière du véhicule.

6. Véhicule électrique hybride rechargeable (1) selon la revendication 4, dans lequel
le premier port de charge (18) est disposé sur la première surface latérale, et
le deuxième port de charge (19) est disposé sur la deuxième surface latérale de manière à être positionné à l'avant de la porte avant (2) dans la direction avant-arrière du véhicule.
